# FASCICULE DE BREVET EUROPEEN

(11) **EP 3 598 328 B1**
(45) Date de publication et mention de la délivrance du brevet: **12.07.2023**
(21) Numéro de dépôt: 19186419.8
(22) Date de dépôt: 16.07.2019
(51) Int. Cl.: G06F 21/32, G06F 21/34, G06F 21/45, H04L 9/32, H04L 9/40

(54) **PROCÉDÉ D'ENREGISTREMENT D'UNE DONNÉE BIOMÉTRIQUE DE RÉFÈRENCE DANS UNE CARTE À PUCE BIOMÉTRIQUE**
VERFAHREN ZUR SPEICHERUNG VON BIOMETRISCHEN REFERENZDATEN AUF EINER BIOMETRISCHEN CHIPKARTE
METHOD FOR RECORDING A REFERENCE BIOMETRIC DATA ITEM IN A BIOMETRIC CHIP CARD

(30) Priorité: 18.07.2018 FR 1856665
(43) Date de publication de la demande: 22.01.2020
(73) Titulaire: IDEMIA France, 92400 Courbevoie (FR)
(72) Inventeur: CLIMEN, Bruno, 92400 COURBEVOIE (FR); MOUROUX, Benoît, 92400 COURBEVOIE (FR)
(74) Mandataire: Idemia

(56) Documents cités:
- WO-A1-2016/055661
- WO-A1-2018/234221
- US-A1- 2015 073 998
- US-A1- 2017 300 680
- US-A1- 2017 366 351
- "iOS Security Contents -White Paper. Apple Inc. September 2014", , 1 September 2014 (2014-09-01), XP055141140, Retrieved from the Internet: URL:http://images.apple.com/privacy/docs/i OS_Security_Guide_Sept_2014.pdf [retrieved on 2014-09-18]

## Description

### DOMAINE DE L'INVENTION

L'invention est dans le domaine des cartes à puce biométriques, par exemple des cartes bancaires ou des badges d'accès électroniques équipés d'un capteur biométrique. Elle concerne, en particulier, un procédé d'enregistrement d'une donnée biométrique de référence dans une carte à puce biométrique comprenant un capteur biométrique, ainsi qu'une telle carte à puce biométrique.

### CONTEXTE DE L'INVENTION

Lorsqu'un utilisateur se voit délivrer une carte à puce biométrique, par exemple une carte bancaire avec un capteur d'empreinte, ou encore un badge d'accès à une zone sécurisée, il est nécessaire de la configurer avec ses données personnelles, par exemple son empreinte digitale.

Pour ce faire, il doit généralement se rendre dans une institution spécifique, par exemple à la banque, ou encore se munir d'un dispositif électronique capable de communiquer avec la carte à puce biométrique et ayant une application spécialement conçue pour enregistrer ses données biométriques de manière sécurisée.

Tout cela est donc très contraignant pour l'utilisateur, notamment lorsqu'il désire utiliser immédiatement sa carte à puce biométrique pour effectuer une transaction financière ou accéder à une zone sécurisée.

Il existe ainsi un besoin pour enregistrer, sans contrainte et de manière sécurisée, une donnée biométrique de référence sur une carte à puce biométrique.

On connaît du document US 2017/366351 un agencement de communication entre un téléphone et une carte à puce. Il y est décrit l'acquisition de données biométriques après saisie d'un code PIN, indépendamment de toute transaction future.

On connaît également le document "iOS Security Contents -White Paper. Apple Inc. September 2014" qui décrit des fonctions associées au capteur d'empreinte géré par le système d'exploitation iOS d'Appel (nom commercial). En particulier, il est prévu d'utiliser les empreintes pour débloquer un dispositif, un mot de passe pouvant toujours être utilisé dans certaines circonstances.

### RESUME DE L'INVENTION

La présente invention a ainsi pour objet de pallier au moins un de ces inconvénients.

Dans ce contexte, un premier aspect de l'invention concerne un procédé d'enregistrement d'une donnée biométrique de référence dans une carte à puce biométrique comprenant un capteur biométrique, tel que défini en revendication 1.

Corrélativement, un deuxième aspect de l'invention concerne une carte à puce biométrique telle que définie en revendication 10.

L'invention ainsi revendiquée permet à un utilisateur de configurer sa carte à puce biométrique en enregistrant une donnée biométrique de référence en s'appuyant sur une transaction classique protégée par code secret personnel avec un dispositif externe classique.

Elle évite une configuration fastidieuse obligeant l'utilisateur à se rendre chez le fournisseur de la carte (par exemple la banque dans le cas d'une carte bancaire biométrique) ou à se connecter à un dispositif ad hoc, tout en préservant la sécurité de l'enregistrement d'une nouvelle biométrie de référence.

D'autres caractéristiques du procédé et de la carte à puce biométrique selon des modes de réalisation de l'invention sont décrites dans les revendications dépendantes.

Le premier dispositif externe est par exemple un terminal de paiement (lecteur de carte à puce ou encore smartphone) d'un point de vente. En variante, le premier dispositif externe est un boitier d'identification ou lecteur de badge pour badge d'accès.

Par exemple, la transaction est une transaction bancaire et la carte à puce biométrique est une carte bancaire par exemple conforme au standard EMV. En variante, la transaction est un contrôle d'accès, par exemple pour accéder à un bâtiment, et la carte à puce biométrique est un badge d'accès.

Il est à noter que le capteur biométrique n'est pas forcément contrôlé par un élément sécurisé. Il peut être par exemple contrôlé par un microcontrôleur additionnel présent sur la carte à puce biométrique, éventuellement à la demande de l'élément sécurisé de la carte à puce. Par exemple, le microcontrôleur additionnel peut piloter de façon autonome le capteur dans le cas de l'acquisition de donnée biométrique réalisé dès la mise sous tension de la carte à puce biométrique.

Dans un mode particulier de réalisation de l'invention, l'acquisition de la donnée biométrique par le capteur biométrique est effectuée à une mise sous tension de la carte à puce biométrique (par exemple la mise sous tension précédant la transaction, ou une autre mise sous tension), ou à l'initiation de la transaction, ou en réponse à la validation du code secret personnel par la carte à puce.

Dans un mode particulier de réalisation de l'invention, le code secret personnel est un code PIN. En variante, le code secret personnel est un mot de passe ou un schéma de type schéma de déverrouillage d'écran tactile.

Dans un mode particulier de réalisation de l'invention, le procédé comprend en outre une étape d'envoi, au premier dispositif externe, d'une commande d'affichage d'une indication relative à l'enregistrement de la donnée biométrique.

Cette commande peut être une commande APDU conforme à la norme ISO 7816.

Par exemple, l'indication indique l'enregistrement de la donnée biométrique comme donnée biométrique de référence. Elle peut également donner des informations sur le déroulement de l'acquisition de la donnée biométrique par le capteur biométrique, ou encore mentionner le doigt qui doit être présenté au capteur.

Dans un mode particulier de réalisation de l'invention, une pluralité de données biométriques de référence est enregistrée dans la carte à puce biométrique, l'étape de modification du mécanisme de sécurisation étant effectuée lorsque le nombre de données biométriques de référence enregistrées dépasse un seuil prédéterminé.

Cette modification permet par exemple d'utiliser la donnée biométrique de référence à la place du code secret personnel pour autoriser une transaction future.

Selon des modes de réalisation, le retour au mécanisme de validation par défaut peut se faire régulièrement, par exemple lorsqu'un nombre prédéterminé de transactions a été effectué avec la carte.

Ainsi, dans un mode particulier de réalisation de l'invention, l'évènement prédéterminé est l'atteinte d'un nombre maximum prédéfini de transactions réalisées par la carte à puce biométrique.

En variante, ce retour peut se faire de manière aléatoire.

Dans un mode particulier de réalisation de l'invention, l'enregistrement de la donnée biométrique comme donnée biométrique de référence comprend l'association d'une information de validité avec la donnée biométrique de référence, l'évènement prédéterminé étant la détermination de l'invalidité de la donnée biométrique de référence en fonction de l'information de validité associée.

A cet effet, le procédé peut comprendre une étape de vérification de l'information de validité avant toute utilisation pour valider une transaction de sorte à déterminer si la donnée biométrique de référence associée est valide ou non.

Dans un mode particulier de réalisation de l'invention, l'information de validité définit une durée de validité de la donnée biométrique de référence, une date de péremption de la donnée biométrique de référence ou un nombre d'utilisation maximum de la donnée biométrique de référence pour valider une transaction.

Ainsi, lorsqu'il est déterminé qu'une donnée biométrique de référence n'est plus valide selon une information de validité qui lui a été associée lors de son enregistrement, le mécanisme de sécurisation revient au mode de validation par défaut, c'est-à-dire basé sur un code secret personnel.

Dans un mode particulier de réalisation de l'invention, le premier dispositif externe est le deuxième dispositif externe.

Dans un mode particulier de réalisation de l'invention, l'interface de communication est une interface de communication par contact conforme à la norme ISO 7816 ou une interface de communication sans contact conforme à la norme ISO 14443 et/ou ISO 15693.

Dans un mode particulier de réalisation de l'invention, la donnée biométrique caractérise une empreinte digitale, un iris, un visage ou un électrocardiogramme.

A titre d'illustration, la donnée biométrique peut comprendre une photo de l'iris, de l'empreinte ou du visage, et/ou un encodage des motifs de celui-ci. Elle peut donner des informations par exemple sur la forme du visage, la position relative de points remarquables du visage tel que l'extrémité du nez, des oreilles ou de la bouche.

Les avantages, buts et caractéristiques particulières de la carte à puce biométrique sont similaires à ceux du procédé précité.

Dans un mode particulier de réalisation, les différentes étapes du procédé précité sont déterminées par des instructions de programmes d'ordinateurs.

En conséquence, l'invention vise aussi un programme d'ordinateur sur un support d'information, ce programme étant susceptible d'être mis en oeuvre par un microprocesseur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un microprocesseur, et comprenant des instructions d'un programme d'ordinateur tel que mentionné ci-dessus.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'information peut être un circuit intégré dans lequel le programme est incorporé, le circuit étant adapté pour exécuter ou pour être utilisé dans l'exécution du procédé en question.

Le support d'information et le programme d'ordinateur précités présentent des caractéristiques et avantages analogues au procédé qu'ils mettent en oeuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- La **figure 1** représente un exemple d'architecture pour un dispositif conforme à des modes de réalisation de l'invention ;
- La **figure 2** représente, sous forme d'organigramme, des étapes générales d'un procédé d'enregistrement conforme à des modes de réalisation de l'invention ;
- La **figure 3** représente, sous forme d'organigramme, des étapes d'un procédé d'enregistrement selon un premier mode de réalisation de l'invention ;
- La **figure 4** représente, sous forme d'organigramme, des étapes d'un procédé d'enregistrement selon un second mode de réalisation de l'invention.

### DESCRIPTION DETAILLEE DE L'INVENTION

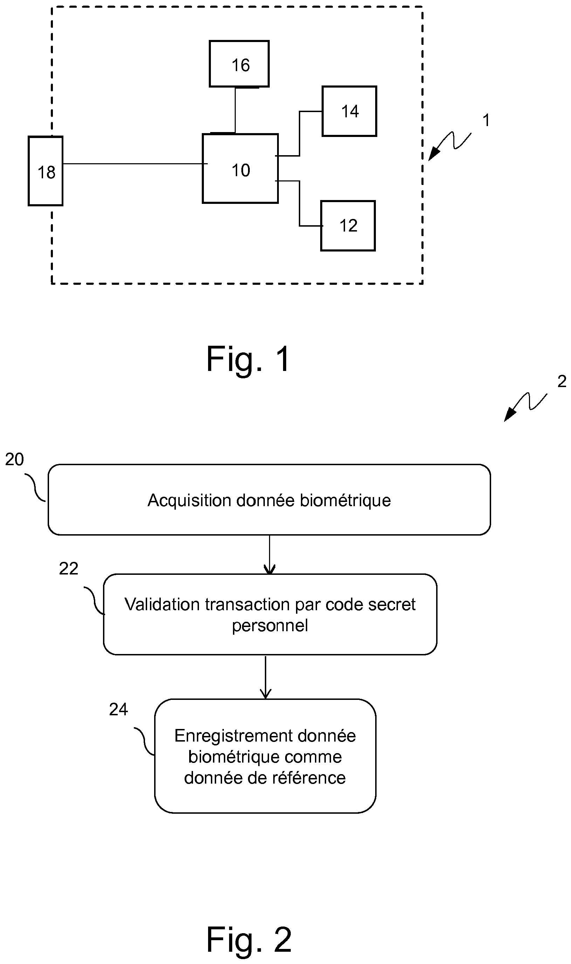

La **figure 1** représente schématiquement un exemple d'architecture possible pour une carte à puce biométrique 1 conforme à des modes de réalisation de l'invention.

La carte à puce biométrique 1 est par exemple une carte bancaire. Dans des modes de réalisation, il s'agit d'une carte bancaire conforme au standard EMV (pour *Europay Mastercard Visa*) qui est depuis 1995 le standard international de sécurité des cartes de paiement (cartes à puce). En variante, la carte à puce biométrique 1 est un badge d'accès à une zone sécurisée d'un bâtiment.

Cette carte à puce biométrique 1 comporte une unité de traitement 10 (ou microprocesseur) reliée par un bus à une mémoire vive (ou volatile) 12, une mémoire non volatile 14, un capteur biométrique 16 et une interface de communication 18.

La mémoire vive 12 est par exemple une RAM (pour *Random Access Memory*) comprenant des registres adaptés à l'enregistrement des variables et paramètres créés et modifiés au cours de l'exécution d'un programme informatique comprenant des instructions pour la mise en oeuvre d'un procédé conforme à des modes de réalisation de l'invention, lors de la mise en oeuvre de l'invention. Les codes d'instructions du programme stocké en mémoire non volatile 14 sont chargés en mémoire RAM en vue d'être exécutés par l'unité de traitement 10.

La mémoire non volatile 14 est par exemple une mémoire ROM (pour *Read Only Memory*), ou une mémoire EEPROM (pour *Electrically Erasable Read Only Memory*) ou encore une mémoire Flash et peut constituer un support au sens de l'invention, c'est-à-dire qu'elle peut comprendre un programme informatique comprenant des instructions pour la mise en oeuvre d'un procédé conforme à des modes de réalisation de l'invention.

Le capteur biométrique 16 est par exemple un capteur d'empreinte digitale, un scanner d'iris ou de visage ou encore un capteur de rythme/fréquence cardiaque.

L'interface de communication 18 permet à la carte à puce biométrique 1 de communiquer avec un dispositif externe. Le dispositif externe est par exemple un terminal de paiement (lecteur de carte à puce ou encore smartphone) d'un point de vente. En variante, le dispositif externe est un boitier d'identification ou lecteur de badge pour badge d'accès.

Selon des modes de réalisation, l'interface de communication 18 est conforme à la norme ISO 7816 (communication à contact) ou aux normes ISO14443 ou NFC/ISO 15693 (communication sans contact).

Dans des modes de réalisation, la carte à puce biométrique peut comporter une ou plusieurs led, par exemple colorées afin de guider l'utilisateur lors de l'acquisition d'une donnée biométrique par le capteur biométrique.

La **figure 2** représente, sous forme d'organigramme, des étapes générales d'un procédé d'enregistrement 2 conforme à des modes de réalisation de l'invention. Ce procédé est par exemple mis en oeuvre par les éléments de la carte à puce biométrique 1 de la figure 1.

Au cours d'une première étape 20, le capteur biométrique 16 de la carte à puce biométrique 1 réalise l'acquisition d'une donnée biométrique d'un utilisateur. Par exemple, si le capteur biométrique 16 est un capteur d'empreinte, la donnée biométrique caractérise une empreinte digitale de l'utilisateur. En fonction de la nature du capteur biométrique 16, la donnée biométrique peut en variante caractériser l'iris, le visage ou encore l'électrocardiogramme de l'utilisateur. Ainsi par exemple, la donnée biométrique peut être une photo de l'iris ou du visage de l'utilisateur, un encodage des motifs de l'iris ou des caractéristiques du visage (par exemple : forme, position relative de points remarquables du visage tel que l'extrémité du nez, des oreilles, de la bouche).

Au cours d'une seconde étape 22, la carte à puce biométrique 1 vérifie un code secret personnel de l'utilisateur qu'elle reçoit d'un premier dispositif externe. Ce code secret personnel est par exemple un code PIN, un mot de passe ou un schéma de type schéma de déverrouillage d'écran tactile. Il a été préalablement saisi par l'utilisateur sur le premier dispositif externe pour autoriser une transaction entre la carte à puce biométrique et un deuxième dispositif externe.

A titre d'illustration, la transaction peut être une transaction bancaire ou un contrôle d'accès, par exemple pour accéder à un bâtiment.

Ainsi, le premier dispositif externe est par exemple un terminal de paiement (lecteur de carte à puce ou encore smartphone) d'un point de vente ou un boitier d'identification ou lecteur de badge pour badge d'accès. Le deuxième dispositif externe est par exemple un serveur de transaction. En variante, le premier dispositif externe et le deuxième dispositif externe sont un seul et même dispositif.

Au cours de cette étape 22, le code secret personnel de l'utilisateur est donc vérifié puis validé par la carte à puce biométrique 1 lorsqu'il est correct. Le résultat de la vérification peut être ensuite transmis au premier dispositif externe afin de l'informer et/ou d'informer le deuxième dispositif que la transaction peut avoir lieu.

Ensuite, au cours d'une étape 24, la donnée biométrique acquise à l'étape 20 est enregistrée dans la carte à puce biométrique 1 comme donnée biométrique de référence si le code secret personnel reçu à l'étape 22 pour autoriser une transaction est validé.

Avantageusement, le procédé décrit permet à l'utilisateur de configurer sa carte à puce biométrique en enregistrant une donnée biométrique de référence en s'appuyant sur une transaction classique protégée par code secret personnel avec un dispositif externe classique. Elle évite une configuration fastidieuse obligeant l'utilisateur à se rendre chez le fournisseur de la carte (par exemple la banque dans le cas d'une carte bancaire biométrique) ou à se connecter à un dispositif *ad hoc,* tout en préservant la sécurité de l'enregistrement d'une nouvelle biométrie de référence.

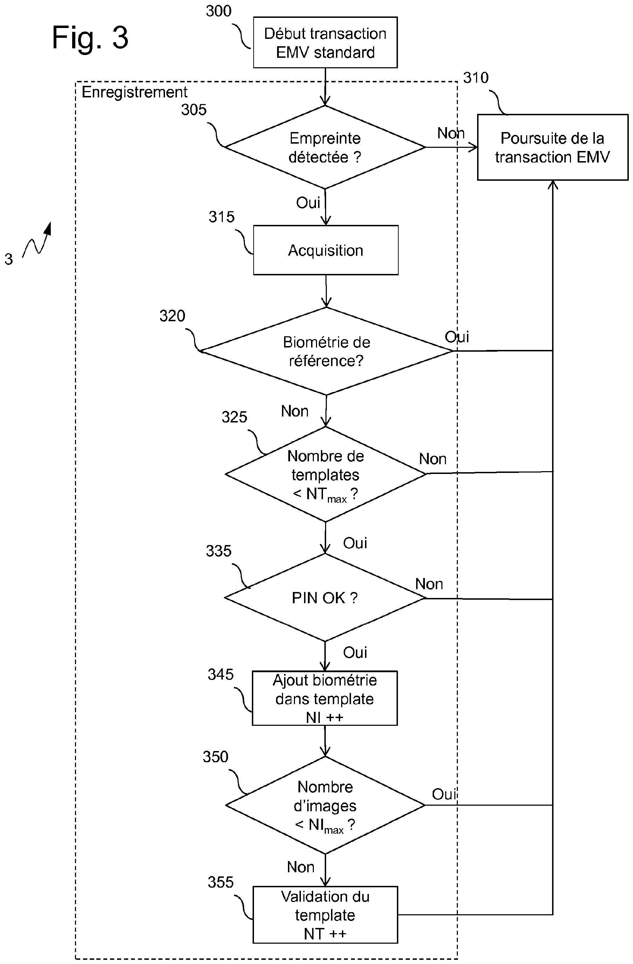

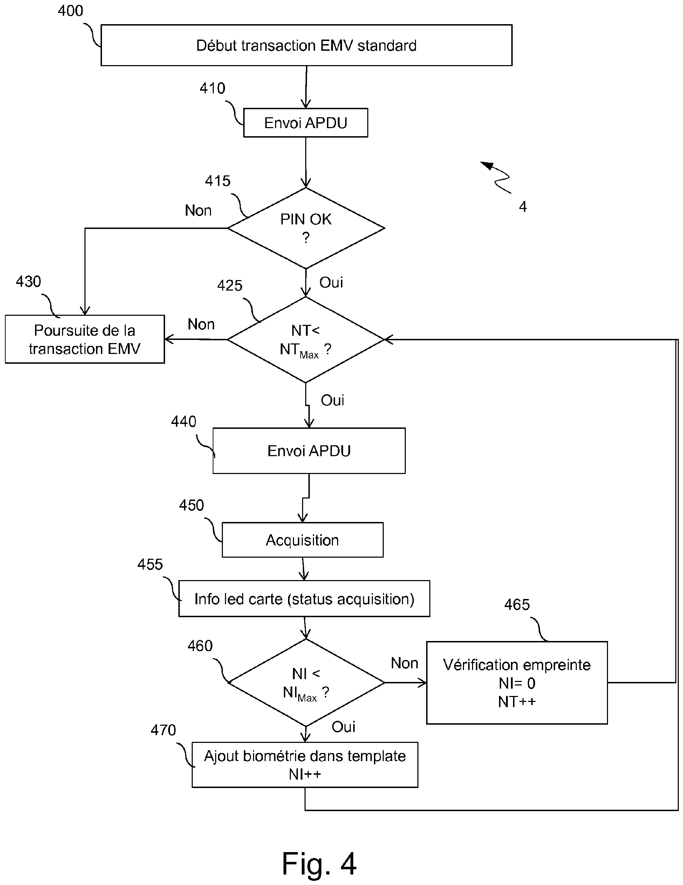

Des exemples d'implémentation de ce procédé général vont maintenant être décrits en référence aux figures 3 et 4.

La **figure 3** représente, sous forme d'organigramme, des étapes d'un procédé d'enregistrement 3 selon un premier mode de réalisation de l'invention.

Selon ce premier mode de réalisation, plusieurs données biométriques de références peuvent être enregistrées, par exemple sous forme de modèle couramment désigné par *template* en anglais, un *template* pouvant comprendre un nombre prédéterminé de données biométriques de référence. La carte à puce biométrique 1 peut alors comprendre plusieurs *templates.*

Dans cet exemple, la transaction est une transaction bancaire de type EMV, la carte à puce biométrique 1 est une carte bancaire, le capteur biométrique est un capteur d'empreinte digitale et la donnée biométrique caractérise donc une empreinte digitale. Toutefois, les modes de réalisation de l'invention ne sont pas limités à cet exemple et, comme il a été décrit en référence à la figure 2, la transaction, la carte à puce biométrique, le capteur biométrique et la donnée biométrique peuvent être d'un autre type.

Ainsi, dans cet exemple, un *template* peut comprendre plusieurs images de la même empreinte (même doigt). Les différents *templates* pouvant correspondre à plusieurs empreintes différentes (c'est-à-dire plusieurs doigts différents). Ceci n'est pas limitatif. On pourrait avoir une image par *template* et plusieurs *templates* pourraient alors correspondre à la même empreinte (au même doigt).

Une première étape 300 correspond au début d'une transaction EMV standard avec un dispositif externe (terminal de paiement par exemple).

Au cours d'une étape 305, la carte à puce biométrique 1 détermine si une empreinte est détectée par le capteur d'empreinte.

Si tel n'est pas le cas, la transaction EMV se poursuit de façon classique (étape 310).

Si en revanche une empreinte est détectée à l'étape 305, le capteur d'empreinte réalise l'acquisition d'informations sur cette empreinte (étape 315). Par exemple, le capteur d'empreinte réalise une photo ou une image de l'empreinte, ou analyse cette empreinte pour en extraire les motifs.

Ainsi, dans cet exemple, la donnée biométrique est acquise lorsque le capteur biométrique détecte la présente du doigt. En variante, la donnée biométrique pourrait être acquise dès l'initiation de la transaction (étape 300), ou en réponse à la validation du code secret personnel par la carte à puce (test 335 positif) ou à un autre moment du procédé par exemple une fois qu'on est sûr que la donnée biométrique pourra être enregistrée eu égard au nombre maximum de *templates* NTmax ou de données biométrique Nlmax autorisé. Dans d'autres modes de réalisation, la donnée biométrique pourrait être acquise indépendamment de la transaction, par exemple à une mise sous tension de la carte à puce biométrique.

A l'étape 320, la carte à puce biométrique 1 détermine si la biométrie acquise à l'étape 315 correspond à une donnée biométrique de référence déjà enregistrée dans la carte.

Si tel est le cas, la transaction se poursuit de façon classique (étape 310).

Dans le cas contraire, il peut s'agir d'une nouvelle donnée biométrique à enregistrer comme donnée biométrique de référence. Il est déterminé à l'étape 325 si le nombre de *templates* enregistrés dans la carte est inférieur au maximum prédéterminé NTmax. Si tel n'est pas le cas, cela signifie que ce maximum est déjà atteint et qu'il n'est pas possible d'enregistrer la donnée acquise comme nouvelle donnée biométrique de référence, le procédé se poursuit alors à l'étape 310.

Si le nombre de *templates* maximum n'est pas encore atteint, le procédé se poursuit avec le test d'un code PIN (étape 335) saisi par l'utilisateur sur le dispositif externe pour autoriser la transaction EMV. L'invention n'est pas limitée aux codes PIN comme mentionnés ci-avant.

Si le code PIN est erroné, le procédé se poursuit avec l'étape 310. Dans ce cas (PIN erroné), l'enregistrement de la donnée biométrique acquise n'est pas effectué.

Un compteur de tentatives de code PIN peut être incrémenté de sorte que la carte est bloquée (c'est-à-dire ne peut plus être utilisée) si un nombre maximum de tentatives est atteint.

Si le code PIN est correct, la donnée biométrique acquise à l'étape 315 est disposée dans un *template* à l'étape 345 de sorte que la donnée biométrique est enregistrée comme donnée biométrique de référence dans la carte. Un compteur de données biométriques NI du *template* est incrémenté. Si ce nombre atteint le maximum Nlmax de données biométriques autorisées dans le *template* (test 350), le *template* est validé à l'étape 355. Le nombre de *template* NT de la carte est incrémenté.

En revanche, si le nombre NI de données biométriques du *template* n'a pas atteint le maximum Nlmax à l'étape 350, la transaction se poursuit normalement à l'étape 310 sans validation du *template.* Le *template* pourra encore être utilisé pour l'enregistrement d'une donnée biométrique de référence ultérieur qui s'ajoutera aux enregistrements de données biométriques de référence déjà effectués dans ledit *template.*

La vérification du code PIN (le même code PIN que celui vérifié dans l'étape 335 pour l'enregistrement de la donnée biométrique) pour autoriser la transaction EMV est traitée indépendamment dans l'étape 300 et/ou 310 de la transaction.

De manière alternative, la vérification du code PIN pour autoriser l'enregistrement de la donnée biométrique acquise (étape 335) pourrait également servir à autoriser directement la transaction.

Ainsi, le code PIN saisi par l'utilisateur sur le dispositif externe peut être vérifié une ou plusieurs fois au cours d'une ou plusieurs étapes.

L'enregistrement de la donnée biométrique est fait indépendamment de la poursuite de la transaction (étape 310).

L'étape 310 comprend par exemple la génération d'un cryptogramme qui pourra permettre de valider la transaction avec la donnée biométrique ou le code PIN.

En effet, dans des modes de réalisation, une étape de modification d'un mécanisme de sécurisation de transaction est prévue. Cette modification permet par exemple d'utiliser la donnée biométrique de référence à la place du code secret personnel pour autoriser une transaction future.

Dans des modes de réalisation, cette modification du mécanisme de sécurisation est effectuée automatiquement lorsque le nombre de données biométriques de référence (ou de *templates*) enregistrées dépasse le maximum autorisé Nlmax (ou NTmax).

Toutefois, afin de maintenir un niveau de sécurité satisfaisant, et/ou de permettre l'enregistrement de données biométriques supplémentaires ou de données biométriques récentes en tant que données biométriques de référence, le mode de validation de la transaction peut revenir à celui par défaut, c'est-à-dire basé sur le code secret personnel de l'utilisateur.

Par exemple, ce retour au mécanisme de validation par défaut peut se faire régulièrement, par exemple lorsqu'un nombre prédéterminé de transactions a été effectué avec la carte.

En variante, ce retour peut se faire de manière aléatoire.

Selon une autre variante, ce retour peut avoir lieu lorsqu'il est déterminé qu'une donnée biométrique de référence n'est plus valide selon une information de validité qui lui a été associée lors de son enregistrement. Cette information de validité est par exemple une durée de validité de la donnée biométrique de référence, une date de péremption de la donnée biométrique de référence ou un nombre d'utilisations maximum de la donnée biométrique de référence pour valider une transaction.

Le bloc labellisé « Enregistrement » comprend des étapes qui dépendent du mode de validation, c'est-à-dire du mécanisme de sécurisation, de la transaction en cours et donc de caractéristiques spécifiques de la transaction et/ou propres à la carte à puce biométrique.

Dans cet exemple, les étapes du bloc labellisé « Enregistrement » ne sont exécutées que si la transaction utilise un code PIN pour sa validation.

On notera que la carte à puce biométrique peut indiquer, durant l'étape 300, au terminal et/ou au serveur de transaction, le mécanisme de sécurisation à utiliser pour valider la transaction. Pour cela, la carte à puce biométrique peut insérer cette indication dans une réponse à une commande qu'elle a préalablement reçue du terminal. Par exemple, dans le cas d'une transaction bancaire de type EMV, la carte à puce biométrique utilise la réponse à la commande nommée GPO (pour *Get Processing Option)* préalablement reçue du terminal.

Le choix, par la carte à puce biométrique, du mécanisme de sécurisation à utiliser pour valider la transaction, peut prendre en compte un ou plusieurs paramètres propres au terminal ou au serveur de transaction. La carte à puce biométrique peut par exemple recevoir ces paramètres dans une commande qu'elle a préalablement reçue de ce dernier pendant l'étape 300. Dans le cas d'une transaction bancaire de type EMV, les options supportées par le terminal sont généralement communiquées à la carte dans la commande nommée GPO (pour *Get Processing Option*)*.*

Comme décrit ci-avant, le choix, par la carte à puce biométrique, du mécanisme de sécurisation à utiliser pour valider la transaction, peut également prendre en compte un ou plusieurs éléments internes à la carte à puce biométrique tels que le nombre de *templates* maximum autorisés NTmax et le nombre maximum de données biométriques autorisées par *template* Nlmax.

Ainsi la carte à puce biométrique peut demander à ce que la transaction soit validée par code PIN, par exemple si le nombre de *templates* validés n'a pas atteint le maximum autorisé NTmax et si le nombre de données biométriques de référence enregistrées dans un *template* non validé n'a pas atteint le maximum autorisé Nlmax. La carte à puce biométrique oblige ainsi l'utilisation d'un code PIN, pour la validation de la transaction en cours et pour pouvoir ainsi enregistrer une nouvelle donnée biométrique en tant que donnée biométrique de référence.

La carte à puce biométrique peut également demander à ce que la transaction soit validée par biométrie si le nombre de *templates* validés n'a pas atteint le maximum autorisé NTmax et si le nombre de données biométriques de référence enregistrées dans un *template* a atteint le maximum autorisé Nlmax au cours de la transaction précédente. La carte à puce biométrique peut ainsi utiliser la vérification de correspondance entre la donnée biométrique acquise et les données biométriques de référence enregistrées dans ce *template,* pour valider à la fois ce *template* et la transaction.

Dans un tel mode d'implémentation ou dans l'alternative exposée ci-après, le procédé illustré figure 3 ne contiendrait pas les étapes 350 et 355. Après l'étape 345 le procédé continuerait directement avec la poursuite de la transaction EMV (étape 310). Les étapes 350 et 355 ne seraient exécutées que si le mode de validation de transaction utilise les données biométriques de référence à la place du code secret personnel, l'étape 350 étant exécutée à la suite de l'étape 300 et l'étape 310 à la suite de l'étape 350 ou de l'étape 355. D'autre part, la vérification de la biométrie (la même biométrie que celle vérifiée pour la validation du *template*) pour autoriser la transaction EMV peut être traitée dans l'étape 300 et/ou 310 de la transaction.

De manière alternative, la carte à puce biométrique pourrait demander à ce que la transaction soit validée par biométrie s'il y a eu enregistrement d'une donnée biométrique de référence pendant la transaction précédente. Cette alternative est particulièrement bien adaptée au cas où chaque *template* ne peut contenir qu'une seule donnée biométrique de référence (plusieurs *templates* pouvant alors correspondre à la même empreinte) et permettrait ainsi d'utiliser la vérification de correspondance entre la donnée biométrique acquise et la donnée biométrique de référence enregistrée au cours de la transaction précédente, pour valider à la fois le *template* correspondant et la transaction.

Avantageusement, un procédé selon le premier mode de réalisation permet de réaliser l'enregistrement de la donnée biométrique de référence de façon transparente à l'aide du code secret personnel de l'utilisateur. En effet, l'utilisateur peut le faire à l'occasion d'une transaction et n'a donc pas à se rendre à un endroit différent ou auprès d'un dispositif de configuration *ad hoc* pour configurer la biométrie de sa carte.

La **figure 4** représente, sous forme d'organigramme, des étapes d'un procédé d'enregistrement 4 selon un second mode de réalisation de l'invention.

Selon ce second mode de réalisation, la carte à puce biométrique 1 est configurée pour envoyer une commande d'affichage d'une indication relative à l'enregistrement de la donnée biométrique au dispositif externe. Le dispositif externe affiche alors des indications permettant de guider l'utilisateur pour configurer sa carte à puce biométrique en enregistrant une donnée biométrique de référence.

Dans cet exemple, plusieurs données biométriques de références sont enregistrées dans des *templates,* jusqu'à ce que le nombre maximum de données (Nlmax) dans chaque *template* soit atteint et jusqu'à ce que tous les *templates* soient remplis (NTmax).

De manière alternative, la carte à puce biométrique pourrait acquérir et enregistrer le nombre maximum de données biométriques de référence autorisé Nlmax pour un *template* au cours d'une transaction.

Une première étape 400 correspond au début d'une transaction EMV standard avec un dispositif externe (terminal de paiement par exemple).

Au cours d'une étape 410, la carte à puce biométrique 1 envoie une trame APDU conforme à la norme ISO 7816 au dispositif externe pour lui demander d'afficher une indication selon laquelle un code secret personnel, ici un code PIN est demandé.

Au cours d'une étape 415, la carte à puce biométrique 1 vérifie le code PIN saisi sur le dispositif externe pour autoriser la transaction suite à l'affichage de l'indication.

Si le code PIN est erroné, le procédé continue à l'étape poursuite de la transaction EMV 430. Dans ce cas, l'enregistrement de données biométriques ne se fera pas. Un compteur de tentatives de code PIN peut être incrémenté de sorte que la carte est bloquée (c'est-à-dire ne peut plus être utilisée) si un nombre maximum de tentatives est atteint.

Si le code PIN est valide, le procédé se poursuit à l'étape 425.

La vérification du code PIN (le même code PIN que celui vérifié pour l'enregistrement de la donnée biométrique) pour l'autorisation de la transaction EMV est traitée indépendamment dans l'étape 400 et/ou 430 de la transaction.

De manière alternative, la vérification du code PIN pour autoriser l'enregistrement de la donnée biométrique acquise (étape 415) pourrait également autoriser directement la transaction.

Ainsi, le code PIN saisi par l'utilisateur sur le dispositif externe peut être vérifié une ou plusieurs fois au cours d'une ou plusieurs étapes.

Il est déterminé à l'étape 425 si le nombre de *templates* NT enregistrés dans la carte est inférieur au maximum prédéterminé NTmax. Si tel n'est pas le cas, cela signifie que ce maximum est déjà atteint et qu'il n'est pas possible d'enregistrer une nouvelle donnée biométrique comme nouvelle donnée biométrique de référence, le procédé se poursuit alors à l'étape 430.

Dans le cas contraire, la carte à puce biométrique envoie une trame APDU au dispositif externe pour lui demander d'afficher une indication invitant l'utilisateur à présenter un doigt sur le capteur d'empreinte (étape 440). Par exemple, l'indication peut demander de présenter un doigt particulier afin de compléter un *template* existant ou juste de présenter un doigt pour créer un nouveau *template.*

A l'étape 450, le capteur d'empreinte réalise l'acquisition d'informations sur l'empreinte du doigt présenté. Par exemple, le capteur d'empreinte réalise une photo ou une image de l'empreinte, ou analyse cette empreinte pour en extraire les motifs.

A l'étape 455, une led présente sur la carte à puce change de couleur (par exemple passe du rouge au vert) pour indiquer la fin de l'acquisition.

Au cours d'une étape 460, la carte teste si le nombre maximum de données biométriques du *template* est atteint.

Si tel est le cas, les données biométriques sont vérifiées (étape 465). La vérification des données biométriques consiste à vérifier la correspondance entre la donnée biométrique acquise à l'étape 450 et les données biométriques de référence enregistrées dans le *template.* Si la donnée biométrique acquise à l'étape 450 correspond aux données biométriques de référence enregistrées dans le *template,* le *template* est validé, le compteur de *template* NT est incrémenté et le nombre de données biométrique NI est remis à zéro (étape 465).

Sinon, au cours d'une étape 470, la donnée biométrique acquise est ajoutée dans le *template* et le nombre de données biométriques NI dans le *template* est incrémenté.

Ensuite, le procédé continue directement avec l'étape 430.

Ce second mode de réalisation permet d'accompagner l'utilisateur dans la configuration de sa carte à l'occasion d'une transaction. Il n'est donc pas obligé de se rendre à la banque ou auprès d'un dispositif spécifique pour ce faire.

Les exemples qui précèdent ne sont que des modes de réalisation de l'invention qui ne s'y limite pas. Notamment, des caractéristiques des premier et second modes de réalisation peuvent être combinées.

## Revendications

1. Procédé d'enregistrement d'une donnée biométrique de référence dans une carte à puce biométrique comprenant un capteur biométrique, comprenant :
l'engagement d'une transaction bancaire protégée par code secret personnel,
la saisie, par un utilisateur de la carte à puce biométrique, d'un code secret personnel sur un premier dispositif externe pour autoriser la transaction bancaire entre la carte à puce biométrique et un deuxième dispositif externe par l'intermédiaire du premier dispositif externe,
la vérification et la validation (22, 335, 415), par la carte à puce biométrique, du code secret personnel saisi,
le procédé étant **caractérisé en ce qu'**il comprend en outre :
en réponse à la validation (22, 335, 415) par la carte à puce biométrique du code secret personnel saisi, l'autorisation de la transaction bancaire et l'enregistrement (24, 345, 470) d'une donnée biométrique (20, 315, 450) acquise par le capteur biométrique, en tant que donnée biométrique de référence pour autoriser une transaction future, et
une étape de modification d'un mécanisme de sécurisation de transaction de sorte que la donnée biométrique de référence enregistrée est utilisée à la place du code secret personnel pour autoriser une transaction future, la modification du mécanisme de sécurisation étant annulée à détection d'un événement prédéterminé ou de manière aléatoire, de sorte que le code secret personnel est de nouveau utilisé pour autoriser une transaction.

2. Procédé selon la revendication 1, dans lequel l'acquisition (20) de la donnée biométrique par le capteur biométrique est effectuée à une mise sous tension de la carte à puce biométrique, ou à l'initiation de la transaction, ou en réponse à la validation du code secret personnel par la carte à puce.

3. Procédé selon l'une quelconque des revendications précédentes, dans lequel le code secret personnel est un code PIN.

4. Procédé selon l'une quelconque des revendications précédentes, comprenant en outre une étape d'envoi (440), au premier dispositif externe, d'une commande d'affichage d'une indication relative à l'enregistrement de la donnée biométrique.

5. Procédé selon l'une quelconque des revendications précédentes, dans lequel une pluralité de données biométriques de référence est enregistrée dans la carte à puce biométrique, l'étape de modification du mécanisme de sécurisation étant effectuée lorsque le nombre de données biométriques de référence enregistrées dépasse un seuil prédéterminé.

6. Procédé selon l'une quelconque des revendications précédentes, dans lequel l'évènement prédéterminé est l'atteinte d'un nombre maximum prédéfini de transactions réalisées par la carte à puce biométrique.

7. Procédé selon l'une quelconque des revendications précédentes, dans lequel l'enregistrement de la donnée biométrique comme donnée biométrique de référence comprend l'association d'une information de validité avec la donnée biométrique de référence, l'évènement prédéterminé étant la détermination de l'invalidité de la donnée biométrique de référence en fonction de l'information de validité associée.

8. Procédé selon la revendication 7, dans lequel l'information de validité définit une durée de validité de la donnée biométrique de référence, une date de péremption de la donnée biométrique de référence ou un nombre d'utilisation maximum de la donnée biométrique de référence pour valider une transaction.

9. Procédé selon l'une quelconque des revendications précédentes, dans lequel le premier dispositif externe est le deuxième dispositif externe.

10. Carte à puce biométrique (1) comprenant :
- un capteur biométrique (16) configuré pour acquérir une donnée biométrique d'un utilisateur de la carte à puce biométrique ;
- une mémoire (14) configurée pour mémoriser ladite donnée biométrique acquise ;
- une interface de communication (18) avec un premier dispositif externe ; et
- un microcontrôleur (10) configuré pour :
o engager une transaction bancaire protégée par code secret personnel,
∘ acquérir un code secret personnel, saisi par un utilisateur de la carte à puce biométrique sur un premier dispositif externe, pour autoriser la transaction bancaire entre la carte à puce biométrique et un deuxième dispositif externe par l'intermédiaire du premier dispositif externe,
∘ vérifier et valider le code secret personnel saisi,
∘ en réponse à la validation du code secret personnel saisi, autoriser la transaction bancaire et mémoriser ladite donnée biométrique acquise par le capteur biométrique, en tant que donnée biométrique de référence pour autoriser une transaction future ; et
dans laquelle un mécanisme de sécurisation de transaction est modifié de sorte que la donnée biométrique de référence enregistrée est utilisée à la place du code secret personnel pour autoriser une transaction future, la modification du mécanisme de sécurisation étant annulée à détection d'un événement prédéterminé ou de manière aléatoire, de sorte que le code secret personnel est de nouveau utilisé pour autoriser une transaction.

11. Carte à puce biométrique (1) selon la revendication 10, dans laquelle l'interface de communication (18) est une interface de communication par contact conforme à la norme ISO 7816 ou une interface de communication sans contact conforme à la norme ISO 14443 et/ou ISO 15693.

12. Carte à puce biométrique (1) selon la revendication 10 ou 11, dans laquelle la donnée biométrique caractérise une empreinte digitale, un iris, un visage ou un électrocardiogramme.

## Patentansprüche

1. Verfahren zum Speichern eines biometrischen Bezugsdatenwerts in einer biometrischen Chipkarte, die einen biometrischen Sensor enthält, das enthält:
die Einleitung einer durch eine persönliche Geheimzahl geschützten Banktransaktion,
die Eingabe, durch einen Benutzer der biometrischen Chipkarte, einer persönlichen Geheimzahl auf einer ersten externen Vorrichtung, um die Banktransaktion zwischen der biometrischen Chipkarte und einer zweiten externen Vorrichtung mittels der ersten externen Vorrichtung zu genehmigen,
die Überprüfung und Validierung (22, 335, 415) der eingegebenen persönlichen Geheimzahl durch die biometrische Chipkarte,
wobei das Verfahren **dadurch gekennzeichnet ist, dass** es außerdem enthält:
als Antwort auf die Validierung (22, 335, 415) der eingegebenen persönlichen Geheimzahl durch die biometrische Chipkarte, die Genehmigung der Banktransaktion und die Speicherung (24, 345, 470) eines vom biometrischen Sensor erfassten biometrischen Datenwerts (20, 315, 450) als biometrischer Bezugsdatenwert zur Genehmigung einer zukünftigen Transaktion, und
einen Schritt der Änderung eines Transaktionssicherungsmechanismus, damit der gespeicherte biometrische Bezugsdatenwert anstelle der persönlichen Geheimzahl verwendet wird, um eine zukünftige Transaktion zu genehmigen, wobei die Änderung des Sicherungsmechanismus bei Erkennung eines vorbestimmten Ereignisses oder zufällig aufgehoben wird, damit die persönliche Geheimzahl erneut verwendet wird, um eine Transaktion zu genehmigen.

2. Verfahren nach Anspruch 1, wobei die Erfassung (20) des biometrischen Datenwerts durch den biometrischen Sensor bei einem Einschalten der biometrischen Chipkarte, oder bei der Initialisierung des Transaktion, oder als Antwort auf die Validierung der persönlichen Geheimzahl durch die Chipkarte ausgeführt wird.

3. Verfahren nach einem der vorhergehenden Ansprüche, wobei die persönliche Geheimzahl ein PIN-Code ist.

4. Verfahren nach einem der vorhergehenden Ansprüche, das außerdem einen Schritt des Sendens (440), an die erste externe Vorrichtung, eines Anzeigebefehls einer Angabe bezüglich des Speicherns des biometrischen Datenwerts enthält.

5. Verfahren nach einem der vorhergehenden Ansprüche, wobei eine Vielzahl von biometrischen Bezugsdaten in der biometrischen Chipkarte gespeichert ist, wobei der Schritt der Änderung des Sicherungsmechanismus ausgeführt wird, wenn die Anzahl von gespeicherten biometrischen Bezugsdaten eine vorbestimmte Schwelle überschreitet.

6. Verfahren nach einem der vorhergehenden Ansprüche, wobei das vorbestimmte Ereignis das Erreichen einer vordefinierten maximalen Anzahl von durch die biometrische Chipkarte durchgeführten Transaktionen ist.

7. Verfahren nach einem der vorhergehenden Ansprüche, wobei die Speicherung des biometrischen Datenwerts als biometrischer Bezugsdatenwert die Verknüpfung einer Gültigkeitsinformation mit dem biometrischen Bezugsdatenwert enthält, wobei das vorbestimmte Ereignis die Bestimmung der Ungültigkeit des biometrischen Bezugsdatenwerts abhängig von der verknüpften Gültigkeitsinformation ist.

8. Verfahren nach Anspruch 7, wobei die Gültigkeitsinformation eine Gültigkeitsdauer des biometrischen Bezugsdatenwerts, ein Verfallsdatum des biometrischen Bezugsdatenwerts oder eine maximale Verwendungszahl des biometrischen Bezugsdatenwerts zum Validieren einer Transaktion definiert.

9. Verfahren nach einem der vorhergehenden Ansprüche, wobei die erste externe Vorrichtung die zweite externe Vorrichtung ist.

10. Biometrische Chipkarte (1), die enthält:
- einen biometrische Sensor (16), der konfiguriert ist, einen biometrischen Datenwert eines Benutzers der biometrischen Chipkarte zu erfassen;
- einen Speicher (14), der konfiguriert ist, den erfassten biometrischen Datenwert zu speichern;
- eine Kommunikationsschnittstelle (18) mit einer ersten externen Vorrichtung; und
- einen Mikrocontroller (10), der konfiguriert ist, um:
o eine durch persönliche Geheimzahl geschützte Banktransaktion einzuleiten,
o eine von einem Benutzer der biometrischen Chipkarte auf einer ersten externen Vorrichtung eingegebene persönliche Geheimzahl zu erfassen, um die Banktransaktion zwischen der biometrischen Chipkarte und einer zweiten externen Vorrichtung mittels der ersten externen Vorrichtung zu genehmigen,
o die eingegebene persönliche Geheimzahl zu überprüfen und zu validieren,
o als Antwort auf die Validierung der eingegebenen persönlichen Geheimzahl, die Banktransaktion zu genehmigen und den vom biometrischen Sensor erfassten biometrischen Datenwert als biometrischer Bezugsdatenwert zur Genehmigung einer zukünftigen Transaktion zu speichern; und
wobei ein Transaktionssicherungsmechanismus geändert wird, damit der gespeicherte biometrische Bezugsdatenwert anstelle der persönlichen Geheimzahl verwendet wird, um eine zukünftige Transaktion zu genehmigen, wobei die Änderung des Sicherungsmechanismus bei Erkennung eines vorbestimmten Ereignisses oder zufällig aufgehoben wird, damit die persönliche Geheimzahl erneut verwendet wird, um eine Transaktion zu genehmigen.

11. Biometrische Chipkarte (1) nach Anspruch 10, wobei die Kommunikationsschnittstelle (18) eine Kommunikationsschnittstelle mit Kontakt gemäß der Norm ISO 7816 oder eine kontaktlose Kommunikationsschnittstelle gemäß der Norm ISO 14443 und/oder ISO 15693 ist.

12. Biometrische Chipkarte (1) nach Anspruch 10 oder 11, wobei der biometrische Datenwert einen Fingerabdruck, eine Iris, ein Gesicht oder ein Elektrokardiogramm kennzeichnet.

## Claims

1. Method for recording a reference biometric data item in a biometric smart card comprising a biometric sensor, comprising:
beginning a bank transaction protected by a personal secret code,
a user of the biometric smart card entering a personal secret code on a first external device to authorize the bank transaction between the biometric smart card and a second external device by means of the first external device,
the biometric smart card verifying and validating (22, 335, 415) the entered personal secret code,
the method being **characterized in that** it further comprises:
in response to the validation (22, 335, 415), by the biometric smart card, of the entered personal secret code, authorizing the bank transaction and recording (24, 345, 470) a biometric data item (20, 315, 450) acquired by the biometric sensor, as a reference biometric data item to authorize a future transaction, and
a step of modifying a secure transaction mechanism so that the recorded reference biometric data item is used instead of the personal secret code to authorize a future transaction, the modification of the secure mechanism being cancelled upon the detection of a predetermined event or in a random manner, so that the personal secret code is again used to authorize a transaction.

2. Method according to Claim 1, wherein the acquisition (20) of the biometric data item by the biometric sensor is completed when the biometric smart card is powered on, or when the transaction is initiated, or in response to the validation of the personal secret code by the smart card.

3. Method according to either one of the preceding claims, wherein the personal secret code is a PIN code.

4. Method according to any one of the preceding claims, further comprising a step (440) of sending, to the first external device, a command to display an indication relating to the recording of the biometric data item.

5. Method according to any one of the preceding claims, wherein a plurality of reference biometric data items is recorded in the biometric smart card, the step of modifying the secure mechanism being completed when the number of recorded reference biometric data items exceeds a predetermined threshold.

6. Method according to any one of the preceding claims, in which the predetermined event is the reaching of a predefined maximum number of transactions carried out by the biometric smart card.

7. Method according to any one of the preceding claims, in which recording the biometric data item as a reference biometric data item comprises associating validity information with the reference biometric data item, the predetermined event being the determination of the invalidity of the reference biometric data item as a function of the associated validity information.

8. Method according to Claim 7, wherein the validity information defines a validity duration for the reference biometric data item, an expiry date for the reference biometric data item or a maximum number of uses of the reference biometric data item to authorize a transaction.

9. Method according to any one of the preceding claims, in which the first external device is the second external device.

10. Biometric smart card (1) comprising:
- a biometric sensor (16) configured to acquire a biometric data item of a user of the biometric smart card;
- a memory (14) configured to store said acquired biometric data item;
- an interface (18) for communicating with a first external device; and
- a microcontroller (10) configured to:
o begin a bank transaction protected by a personal secret code,
o acquire a personal secret code, entered by a user of the biometric smart card on a first external device, to authorize the bank transaction between the biometric smart card and a second external device by means of the first external device,
o verify and validate the entered personal secret code,
o in response to the validation of the entered personal secret code, authorize the bank transaction and store said biometric data item acquired by the biometric sensor, as a reference biometric data item to authorize a future transaction; and
in which a secure transaction mechanism is modified so that the recorded reference biometric data item is used instead of the personal secret code to authorize a future transaction, the modification of the secure mechanism being cancelled upon the detection of a predetermined event or in a random manner, so that the personal secret code is again used to authorize a transaction.

11. Biometric smart card (1) according to Claim 10, wherein the communication interface (18) is a contact communication interface compliant with standard ISO 7816 or a contactless communication interface compliant with standard ISO 14443 and/or ISO 15693.

12. Biometric smart card (1) according to Claim 10 or 11, wherein the biometric data item characterizes a fingerprint, an iris, a face or an electrocardiogram.
